# EUROPÄISCHE PATENTANMELDUNG

(11) **EP 3 913 273 A1**
(43) Veröffentlichungstag der Anmeldung: **24.11.2021**
(21) Anmeldenummer: 20175873.7
(22) Anmeldetag: 20.05.2020
(51) Int. Cl.: F17C 3/02

(54) **BRENNGASVERSORGUNGSSYSTEM UND VERFAHREN ZUM VERSORGEN EINES HOCHDRUCK-GASEINSPRITZMOTORS MIT BRENNGAS**

(30) Priorität: 19.05.2020 EP 20175575
(71) Anmelder: Burckhardt Compression AG, 8404 Winterthur (CH)
(72) Erfinder: SCHROTH, Roman, 8400 Winterthur (CH)
(74) Vertreter: Hepp Wenger Ryffel AG

(57) **Zusammenfassung**

Brenngasversorgungssystem (1) zum Versorgen eines Hochdruck-Gaseinspritzmotors (2) mit in einem LNG-Tank (3) gespeicherten Gas, umfassend eine Hochdruckpumpe (5), welcher Flüssiggas (F1) aus dem LNG-Tank (3) zugeführt ist, umfassend einen Kondensator (6) in welchem ein Hochdruckwärmetauscher (13) angeordnet ist, umfassend einen Hochdruckverdampfer (7), der über den Hochdruckwärmetauscher (13) mit der Hochdruckpumpe (5) verbunden und stromabwärts des Kondensators (6) angeordnet ist, wobei das Gas nach dem Hochdruckverdampfer (7) dem Hochdruck-Gaseinspritzmotor (2) zugeleitet ist, umfassend einen Verdichter (9), dem Abdampfgas (F2) aus dem LNG-Tank (3) zugeführt ist, wobei der Verdichter (9) stromabwärts über eine Einleitung (15d) mit dem Kondensator (6) verbunden ist, um das Abdampfgas (F2) in den Kondensator (6) einzuleiten, sowie umfassend einen Kondensationskerngenerator (10), dem von der Hochdruckpumpe (5) Flüssiggas (F1) zugeleitet ist, wobei der Kondensationskerngenerator (10) und die Einleitung (15d) derart im Kondensator (6) zusammenwirkend angeordnet sind, dass die vom Kondensationskerngenerator (10) erzeugten Kondensationskerne im Kondensator (6) eine Kondensation des zugeleiteten Abdampfgases (F2) fördern, sodass sich daraus Flüssiggas (F1) ausbildet, und dass das sich im Kondensator (6) gebildete Flüssiggas (F1) der Hochdruckpumpe (5) und/oder dem LNG-Tank (3) zugeleitet ist.

## Beschreibung

Die Erfindung betrifft ein Brenngasversorgungssystem. Die Erfindung betrifft weiter ein Verfahren zum Versorgen eines Hochdruck-Gaseinspritzmotors mit Brenngas.

### Stand der Technik

Erdgas ist ein Energieträger, der zunehmend an Bedeutung gewinnt. In der Handelsschifffahrt wird Erdgas zunehmend als alternativer Kraftstoff verwendet, um die neu geltenden Anforderungen an die Schifffahrtsindustrie bezüglich Abgasreinheit und Treibhausgasreduzierung zu erfüllen. Das als Kraftstoff verwendete Erdgas wird auf den Schiffen üblicherweise in flüssiger Form als Flüssigerdgas, auf Englisch "Liquefied Natural Gas" oder abgekürzt LNG, und in LNG-Tanks bei ungefähr atmosphärischem Druck und einer Temperatur von etwa -163°C gespeichert. Auf Grund der niedrigen Siedetemperatur des Flüssigerdgases von etwa -162°C bei atmosphärischem Druck wird durch die von Aussen auf die LNG-Tanks einwirkende Wärme kontinuierlich flüssiges Gas verdampft, das sich oben im LNG-Tank als Abdampfgas, auf Englisch "Boil Off Gas" oder abgekürzt BOG, ansammelt, was einen Druckanstieg im LNG-Tank zur Folge hat. Um diesem Druckanstieg entgegenzuwirken ist es bekannt eine BOG-Rückverflüssigungsanlage vorzusehen, welche das Abdampfgas verflüssigt und als Flüssiggas wieder dem LNG-Tank zuführt. Eine weitere Möglichkeit besteht darin das Abdampfgas direkt als Schiffsantriebskraftstoff zu verwenden. Dazu wird Erdgas auf einen hohen Druck im Bereich von beispielsweise 150 bis 300 bara oder 400 bara zu Hochdruckbrenngas verdichtet und einem Hochdruck-Gaseinspritzmotor zugeleitet. Ein solcher Motor wird beispielsweise von der Firma MAN-SE unter der Bezeichnung ME-GI-Motor vertrieben. Ein solcher Motor bildet vorzugsweise das Hauptantriebssystem eines Handelsschiffs.

Das Dokument KR1020110030149 offenbart ein Brenngasversorgungssystem zum Versorgen eines Hochdruck-Gaseinspritzmotors eines Flüssiggastankschiffs mit Brenngas. Dieses System ist einerseits in der Lage, im LNG-Tank gespeichertes Erdgas auf einen derart hohen Druck zu verdichten, dass dieses dem Hochdruck-Gaseinspritzmotor zugeleitet werden kann, und ist andererseits in der Lage einen übermässigen Druckanstieg im LNG-Tank zu verhindern, indem, falls erforderlich, Abdampfgas rückverflüssigt wird und anschliessend dem Hochdruck-Gaseinspritzmotor und/oder dem LNG-Tank zugeführt wird. Das im Dokument KR1020110030149 offenbarte Brenngasversorgungssystem weist die Nachteile auf, dass dieses relativ aufwändig und teuer ist, und dass zu dessen Betrieb ein erheblicher Energieaufwand erforderlich ist.

### Darstellung der Erfindung

Aufgabe der Erfindung ist es ein wirtschaftlich vorteilhafteres Brenngasversorgungssystem zu bilden. Zudem ist es Aufgabe der Erfindung ein wirtschaftlich vorteilhafteres Verfahren zum Versorgen eines Hochdruck-Gaseinspritzmotors mit Brenngas zu bilden. Diese Aufgabe wird gelöst mit einem Brenngasversorgungssystem aufweisend die Merkmale von Anspruch 1. Die abhängigen Ansprüche 2 bis 9 betreffen weitere vorteilhafte Ausgestaltungen. Die Aufgabe wird weiter gelöst mit einem Verfahren aufweisend die Merkmale von Anspruch 10. Die abhängigen Ansprüche 11 bis 14 betreffen weitere, vorteilhafte Verfahrensschritte.

Die Aufgabe wird insbesondere gelöst mit einem Brenngasversorgungssystem zum Versorgen eines Hochdruck-Gaseinspritzmotors mit in einem LNG-Tank gespeicherten Gas, umfassend eine Hochdruckpumpe, welche Fluid leitend mit dem LNG-Tank verbindbar ist, um Flüssiggas aus dem LNG-Tank zuzuführen und dieses zu einem Hochdruckflüssiggas zu verdichten, umfassend einen Kondensator in welchem ein Hochdruckwärmetauscher angeordnet ist, umfassend einen Hochdruckverdampfer, der über den Hochdruckwärmetauscher Fluid leitend mit der Hochdruckpumpe verbunden und stromabwärts des Kondensators angeordnet ist, wobei der Hochdruckverdampfer das Hochdruckflüssiggas in ein Hochdruckbrenngas wandelt und das Hochdruckbrenngas nach dem Hochdruckverdampfer dem Hochdruck-Gaseinspritzmotor zugeleitet ist, umfassend einen Verdichter, der Fluid leitend mit dem LNG-Tank verbindbar ist, um Abdampfgas aus dem LNG-Tank zuzuführen, wobei der Verdichter stromabwärts über eine Einleitung Fluid leitend mit einem Innenraum des Kondensators verbunden ist, um das Abdampfgas in den Innenraum einzuleiten, sowie umfassend einen Kondensationskerngenerator, der stromaufwärts Fluid leitend mit der Hochdruckpumpe verbunden ist, wobei der Kondensationskerngenerator derart ausgestaltet ist, dass dieser aus dem Hochdruckflüssiggas Flüssiggaströpfchen erzeugt, die als Kondensationskerne dienen, wobei der Kondensationskerngenerator die Kondensationskerne in den Innenraum einführt, um über die Kondensationskerne eine Kondensation des eingeleiteten Abdampfgases zu fördern, sodass sich daraus Flüssiggas ausbildet, und dass das sich im Kondensator gebildete Flüssiggas der Hochdruckpumpe und/oder dem LNG-Tank zugeleitet ist.

Die Aufgabe wird insbesondere auch gelöst mit einem Brenngasversorgungssystem zum Versorgen eines Hochdruck-Gaseinspritzmotors mit in einem LNG-Tank gespeicherten Gas, umfassend eine Hochdruckpumpe, welcher Flüssiggas aus dem LNG-Tank zugeführt ist, umfassend einen Kondensator in welchem ein Hochdruckwärmetauscher angeordnet ist, umfassend einen Hochdruckverdampfer, der über den Hochdruckwärmetauscher mit der Hochdruckpumpe verbunden und stromabwärts des Kondensators angeordnet ist, wobei das Gas nach dem Hochdruckverdampfer dem Hochdruck-Gaseinspritzmotor zugeleitet ist, umfassend einen Verdichter, dem Abdampfgas aus dem LNG-Tank zugeführt ist, wobei der Verdichter stromabwärts über eine Einleitung mit dem Kondensator verbunden ist, um das Abdampfgas in den Kondensator einzuleiten, sowie umfassend einen Kondensationskerngenerator, dem von der Hochdruckpumpe Flüssiggas zugeleitet ist, wobei der Kondensationskerngenerator und die Einleitung derart im Kondensator zusammenwirkend angeordnet sind, dass die vom Kondensationskerngenerator erzeugten Kondensationskerne im Kondensator eine Kondensation des zugeleiteten Abdampfgases fördern, sodass sich daraus Flüssiggas ausbildet, und dass das sich im Kondensator gebildete Flüssiggas der Hochdruckpumpe und/oder dem LNG-Tank zugeleitet ist.

Die Aufgabe wird insbesondere gelöst mit einem Verfahren zum Versorgen eines Hochdruck-Gaseinspritzmotors mit Gas, wobei das Gas in einem LNG-Tank teilweise als Flüssiggas und teilweise als Abdampfgas gespeichert ist, indem das Flüssiggas aus dem LNG-Tank einer Hochdruckpumpe zugeführt wird und von dieser zu einem Hochdruckflüssiggas verdichtet wird, wobei das Hochdruckflüssiggas anschliessend einem in einem Kondensator angeordneten Hochdruckwärmetauscher und nachfolgend einem Hochdruckverdampfer zugeführt wird, wobei das Hochdruckflüssiggas im Hochdruckverdampfer in ein Hochdruckbrenngas umgewandelt wird, sodass ein unter Hochdruck stehendes Brenngas erzeugt wird, welches dem Hochdruck-Gaseinspritzmotor zugeleitet wird, indem das Abdampfgas aus dem LNG-Tank einem Verdichter zugeführt und anschliessend in den Kondensator eingeleitet wird, wobei in einem Kondensationskerngenerator aus Hochdruckflüssiggas ein Strom von Kondensationskernen in Form von Flüssiggaströpfchen erzeugt wird, welche im Kondensator dem eingeleiteten Abdampfgas zugeleitet werden, um durch die Flüssiggaströpfchen eine Kondensation des Abdampfgases zu Flüssiggas zu fördern, und indem das im Kondensator gebildete Flüssiggas der Hochdruckpumpe und/oder dem LNG-Tank zugeleitet wird.

Die Aufgabe wird zudem insbesondere auch gelöst mit einem Verfahren zum Versorgen eines Hochdruck-Gaseinspritzmotors mit Brenngas, das in einem LNG-Tank teilweise als Flüssiggas und teilweise als Abdampfgas gespeichert ist, indem das Flüssiggas aus dem LNG-Tank einer Hochdruckpumpe, anschliessend einem in einem Kondensator angeordneten Hochdruckwärmetauscher und nachfolgend einem Hochdruckverdampfer zugeführt wird, sodass ein unter Hochdruck stehendes Brenngas erzeugt wird, das dem Hochdruck-Gaseinspritzmotor zugeleitet wird, indem das Abdampfgas einem Verdichter zugeführt und anschliessend in den Kondensator eingeleitet wird, und dass im Kondensator dem eingeleiteten Abdampfgas Kondensationskerne zugeleitet werden, um die Kondensation des Abdampfgases zu Flüssiggas zu fördern, und indem das im Kondensator gebildete Flüssiggas der Hochdruckpumpe und/oder dem LNG-Tank zugeleitet wird.

Das erfindungsgemässe Brenngasversorgungssystem verwendet einen Kondensator zum Kondensieren von Abdampfgase zu Flüssiggas. Dazu werden mit Hilfe eines Kondensationskerngenerators aus Flüssiggas Kondensationskerne erzeugt, welche innerhalb des Kondensators mit sich in einem Innenraum des Kondensators befindlichem Abdampfgas in Kontakt kommen, sodass das Abdampfgas an den Kondensationskernen anhaftet und dabei zu Flüssiggas kondensiert. Die Kondensationskerne werden vorzugsweise mit Hilfe von Hochdruckflüssiggas erzeugt, das durch eine Düse, insbesondere eine Spraydüse geleitet wird, sodass mit Hilfe der Düse eine Vielzahl von Flüssigkeitströpfchen erzeugt werden, die als Kondensationskerne dienten. Das erfindungsgemässe Brenngasversorgungssystem weist die Vorteile auf, dass die Kondensation bei einem relativ tiefen Druck stattfindet, beispielsweise bei einem Druck im Bereich von unter 50 bara, vorzugsweise in einem Bereich von 20 bis 30 bara, und besonders bevorzugt in einem Bereich 10 bis 20 bara, und dass ein Kondensat bzw. Flüssiggas mit relativ tiefer Temperatur erzeugt wird, beispielsweise mit einer Temperatur von unter -120°C, und vorzugsweise im Bereich -120°C und 150°C. Ein Druck unter 20 bara weist den Vorteil auf, dass zum Verdichten des Abdampfgases F2 im Verdichter 9 ein zweistufiger Verdichter genügt. Für einen Druck im Bereich zwischen 40 und 50 bara ist ein dreistufiger Verdichter 9 erforderlich. Aus Kostengründen wird ein zweistufiger Verdichter 9 bzw. ein Verdichten des Abdampfgases F2 in einem Bereich von 10 bis 20 bara besonders bevorzugt. Der relativ tiefe Druck im Innenraum des Kondensators, der während der Kondensation anliegt, erfordert eine tiefere spezifische Enthalpie für den stromaufwärts des Kondensators stattfindenden Verdichtungsprozess des Abdampfgases, welcher stattfindet, bevor das Abdampfgas dem Kondensator zugeleitet wird. Dies ergibt den Vorteil, dass ein kleinerer und somit kostengünstigerer Verdichter für diesen Verdichtungsprozess genügt. Die tiefere Temperatur des Kondensats führt, falls das Kondensat anschliessend einer Hochdruckpumpe zugeführt wird, zudem zu einem reduzierten Abdampfen in der Hochdruckpumpe, und erhöht deshalb die mittlere Zeit zwischen den Wartungen der Hochdruckpumpe, auch als MTBO bezeichnet, sodass das erfindungsgemässe Brenngasversorgungssystem kostengünstiger und zuverlässiger betreibbar ist.

Das erfindungsgemässe Brenngasversorgungssystem weist somit den Vorteil auf, dass der Rückverflüssigungsdruck und die Rückverflüssigungstemperatur des zu verflüssigenden Abdampfgases beziehungsweise das dabei erzeugen Flüssiggases reduziert ist.

Das erfindungsgemässe Brenngasversorgungssystem weist den weiteren Vorteil auf, dass die stromaufwärts des Kondensators erfolgende Verdichtung des Abdampfgases eine reduzierte spezifische Enthalpie erfordert, sodass dieser Verdichter kostengünstiger ausgestaltet werden kann, und für diesen Verdichter zudem reduzierte Betriebskosten (Englisch OPEX, "Operational Expenditures"), und insbesondere reduzierte Energiekosten anfallen.

Das erfindungsgemässe Brenngasversorgungssystem weist den weiteren Vorteil auf, dass durch die verbesserte Kondensation ein kleineres Kondensatordesign erforderlich ist, was die Investitionsausgaben (Englisch CAPEX, "Capital Expenditure") reduziert. Durch die verbesserte Kondensation genügt ein Hochdruckwärmetauscher mit geringerer Wärmeübertragungsfläche, sodass innerhalb des Kondensators ein kleinerer Hochdruckwärmetauscher und dadurch ein kleinerer Kondensator erforderlich sind.

Das erfindungsgemässe Brenngasversorgungssystem weist den weiteren Vorteil auf, dass durch die reduzierte, tiefere Temperatur des aus dem Abdampfgas kondensierten Flüssiggas die Leistung der Hochdruckpumpe verbessert wird.

Vorzugsweise wird aus oder nach der Hochdruckpumpe ein Seitenstrom von Hochdruckflüssiggas entnommen. Vorteilhafterweise wird dieser Seitenstrom von Hochdruckflüssiggas in einem Wärmetauscher gekühlt, wobei diesem Wärmetauscher Abdampfgas aus dem LNG-Tank zugeleitet wird. Vorteilhafterweise umfasst der Kondensator zum Kondensieren des Abdampfgases einen Kondensationskerngenerator beziehungsweise ein Injektorsystem zur Tröpfchenerzeugung, dem das unterkühlte Hochdruckflüssiggas zugeleitet wird, um Kondensationskerne bzw. Aerosoltröpfchen zu erzeugen und diese in den Innenraum des Kondensators einzuleiten beziehungsweise diese im Innenraum des Kondensators zu versprühen, wobei die Kondensationskerne zur verbesserten Kondensation des Abdampfgases dienen.

Die Erfindung wird nachfolgend an Hand mehrerer Ausführungsbeispiele im Detail beschrieben.

### Kurze Beschreibung der Zeichnungen

Die zur Erläuterung der Ausführungsbeispiele verwendeten Zeichnungen zeigen:
- Fig. 1: schematisch ein erstes Ausführungsbeispiel eines Brenngasversorgungssystems;
- Fig. 2: schematisch ein zweites Ausführungsbeispiel eines Brenngasversorgungssystems;
- Fig. 3: schematisch ein drittes Ausführungsbeispiel eines Brenngasversorgungssystems;
- Fig. 4: schematisch ein viertes Ausführungsbeispiel eines Brenngasversorgungssystems;
- Fig. 5: schematisch ein fünftes Ausführungsbeispiel eines Brenngasversorgungssystems;
- Fig. 6: schematisch einen Kondensator.

Grundsätzlich sind in den Zeichnungen gleiche Teile mit gleichen Bezugszeichen versehen.

### Wege zur Ausführung der Erfindung

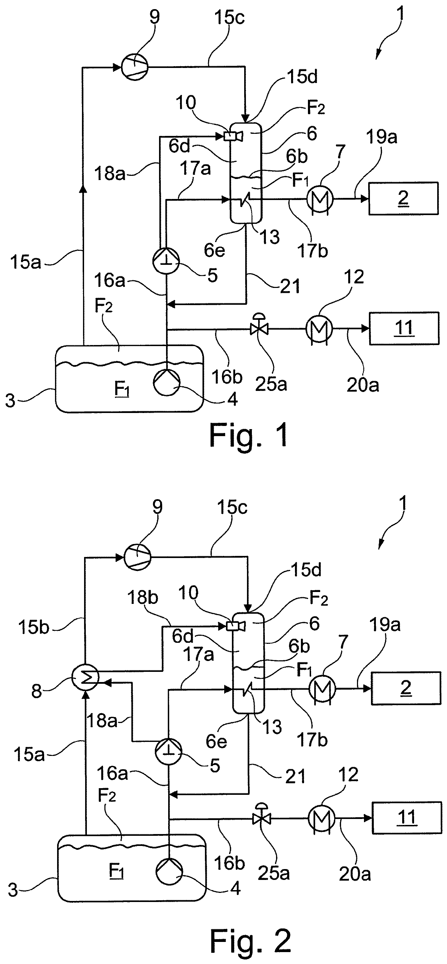

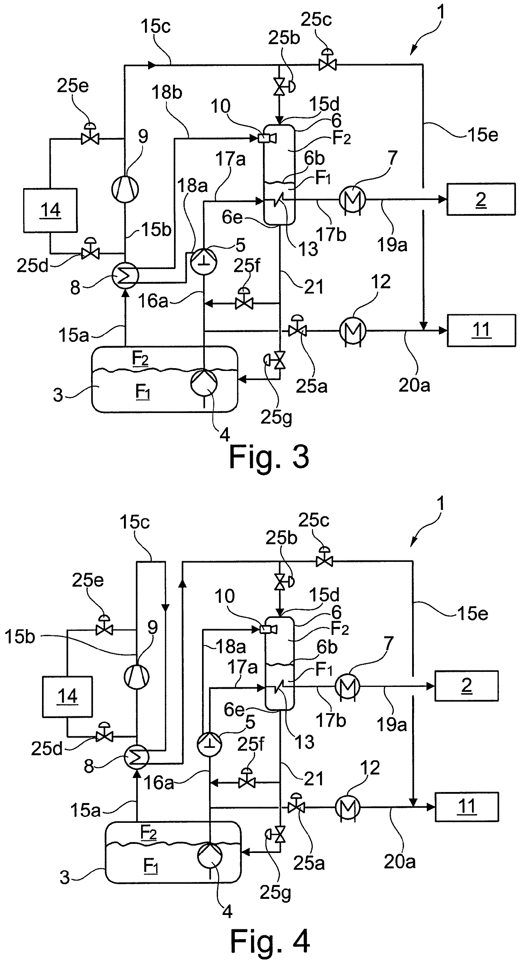

Fig. 1 zeigt ein Brenngasversorgungssystem 1 zum Versorgen eines Hochdruck-Gaseinspritzmotors 2, vorzugsweise eines ME-GI-Motors, mit Brenngas, vorzugsweise Methan. Das Brenngas ist in einem LNG-Tank 3 gespeichert, teilweise in Form von Flüssiggas F1 und, auf Grund der im LNG-Tank 3 auftretenden Verdampfung des Flüssiggases F1, teilweise in Form von Abdampfgas F2. Dieses Abdampfgas F2 wird auch als BOG oder NBOG (Natural Boil-Off Gas) bezeichnet. Zur Versorgung des Hochdruck-Gaseinspritzmotors 2 mit Brenngas mit einem Druck im Bereich von beispielsweise 150 bis 300 bara, wird das sich im LNG-Tank 3 befindliche Flüssiggas F1 über eine Niederdruckpumpe 4 und eine Niederdruckfluidleitung 16a einer Hochdruckpumpe 5 zugeführt, welche den Druck des Flüssiggases F1 auf einen Hochdruck von beispielsweise zwischen 150 und 300 bara erhöht. Diese Hochdruckflüssiggas wird anschliessend über eine Hochdruckfluidleitungen 17a, einen Hochdruckwärmetauscher 13 und einer Hochdruckfluidleitung 17b einem Hochdruckverdampfer 7 zugeführt, welcher das Hochdruckflüssiggas zu einem gasförmigen bzw. superkritischen Hochdruckgas verdampft, wobei dieses Hochdruckgas, aufweisend im dargestellten Ausführungsbeispiel einen Druck von etwa 300 bara, dem Hochdruck-Gaseinspritzmotor 2 zugeführt wird. Das dargestellte Brenngasversorgungssystem 1 umfasst zudem einen Kondensator 6 mit einem Innenraum 6d, in welchem sich zumindest während des Betriebs des Brenngasversorgungsystems Flüssiggas F1 und Abdampfgas F2 befindet. Das Abdampfgas F2 ist über eine Gasleitung 15a vom LNG-Tank 3 einem Verdichter 9 zugeleitet, welcher das Abdampfgas F2 verdichtet, wobei dieses verdichtete Abdampfgas F2 über eine Gasleitung 15c und über eine nachfolgende Einleitung 15d in den Innenraum 6d des Kondensators 6 eingeleitet wird. Das Brenngasversorgungssystem 1 umfasst zudem einen Kondensationskerngenerator 10, dem von der Hochdruckpumpe 5 über einen Seitenstrom bzw. über die Hochdruckfluidleitung 18a Hochdruckflüssiggas zugeleitet ist. Der Kondensationskerngenerator 10 und die Einleitung 15d sind derart im Kondensator 6 zusammenwirkend angeordnet, dass die vom Kondensationskerngenerator 10 erzeugten und in den Innenraum 6d versprühten, flüssigen Kondensationskerne 10a bzw. Flüssiggaströpfchen, im Kondensator 6 eine Kondensation des zugeleiteten Abdampfgases F2 fördern, sodass sich Abdampfgas F2 am Kondensationskern anlagert und zu Flüssiggas F1 kondensiert, und sich danach im unteren Bereich des Kondensators 6 ansammelt. Dieses sich im Kondensator 6 ansammelnde Flüssiggas F1 wird über einen Auslass 6e und eine Rückführleitung 21 der Hochdruckpumpe 5 zugeführt, oder, wie in Figur 3 dargestellt, wahlweise der Hochdruckpumpe 5 und/oder dem LNG-Tank 3 zugeleitet. Der Hochdruckwärmetauscher 13 ist, wie in Figur 1 dargestellt, im bzw. innerhalb des Kondensators 6 angeordnet, um den Inhalt des Kondensators 6, insbesondere das sich darin befindliche Abdampfgas F2 zu kühlen und ebenfalls zu kondensieren. Das durch den Wärmetauscher 13 strömende, überkritische Hochdruckflüssiggas hat somit die Funktion einer Wärmesenke. Der Verdichter 9 ist beispielsweise als ein Kolbenverdichter ausgestaltet, beispielsweise als ein Labyrinthkolbenverdichter, und beispielsweise als zweistufiger oder dreistufiger Kolbenverdichter, vorbei zumindest einer der Kolbenverdichter, vorzugsweise der erste stromabwärts des LNG-Tanks 3 angeordnete Kolbenverdichter, als Labyrinthkolbenverdichter ausgestaltet ist. Der Verdichter oder zumindest eine Verdichterstufe könnte jedoch auch als Turboverdichter oder in einer anderen Verdichtertechnologie ausgestaltet sein.

Optional umfasst das Brenngasversorgungssystem 1 zudem noch eine Niederdruckfluidleitung 16b und ein Ventil 25a, um zumindest einen Teilstrom des von der Niederdruckpumpe 4 geförderten Flüssiggases F1 einem Niederdruckverdampfer 12 zuzuführen, welcher das Flüssiggas F1 zu gasförmigem Niederdruckgas verdampft, aufweisend einen Druck im Bereich von beispielsweise 7 bis 9 bara. Dieses Niederdruckgas ist einem Niederdruckverbraucher 11 zugeleitet ist, beispielsweise einem Gas betriebenen Generator oder Boiler.

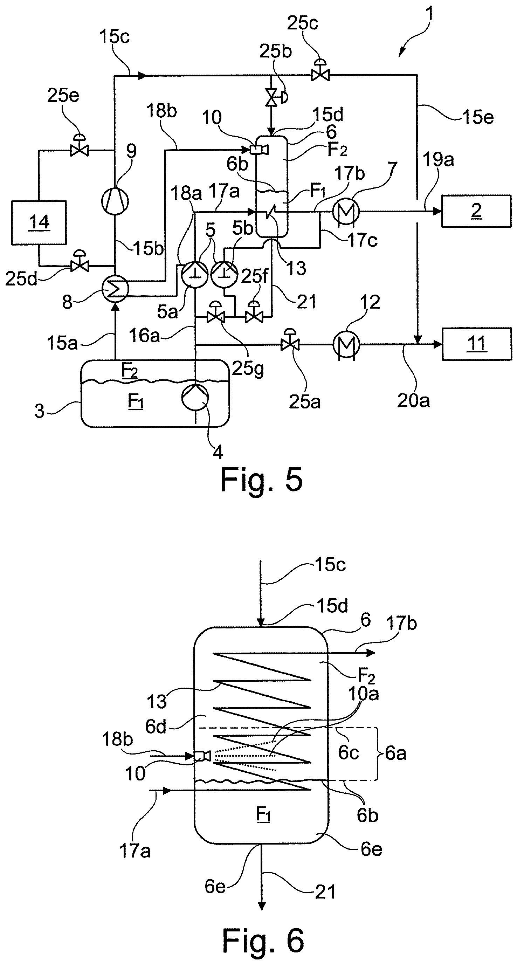

Figur 6 zeigt ein Ausführungsbeispiel eines Kondensators 6 im Detail, wie dieser im Brenngasversorgungssystem 1 gemäss Figur 1 verwendet werden könnte. Das Abdampfgas F2 wird über die Gasleitung 15c und die Einleitung 15d oben in den Innenraum 6d des Kondensators 6 einleitet. Ein Seitenstrom des Hochdruckflüssiggases wird über die Hochdruckleitung 18a und den Kondensationskerngenerator 10 in den Innenraum 6d des Kondensators 6 eingesprüht, unter Ausbildung einer Vielzahl von als Kondensationskerne dienenden Tropfen 10a. Eine Rückführleitung 21 mündet unten in den Innenraum des Kondensators 6, um das sich im unteren Bereich des Innenraums befindliche Flüssiggas F1 abzuführen. Der Hockdruckwärmetauscher 13 erstreckts sich im Innenraum 6d des Kondensators 6 vorzugsweise in vertikaler Richtung von unten noch oben, wobei das Hochdruckflüssiggas über die Hochdruckfluidleitung 17a zugeführt und über die Hochdruckfluidleitung 17b abgeführt wird. Vorteilhafterweise erstreckt sich der Hochdruckwärmetauscher 13 wie in Figur 4 dargestellt zum grössten Teil, beispielsweise zu 9/10, innerhalb desjenigen Teils des Innenraums 6d, in welchem sich das Abdampfgas F2 oder eine Mischung von Abdampfgas F2 und Tröpfchen von Flüssiggas F1 befindet.

Der Kondensator 6 kann während des Betriebs beispielsweise mit den nachfolgenden Verfahrenswerten betrieben werden. Das Hochdruckflüssiggas wird mit einem Druck von 300 bara dem Hochdruckwärmetauscher 13 zugeführt, und verlässt diesen mit im Wesentlichen denselben Druck wieder. Das Abdampfgas F1 wird mit einem Druck von 17 bara und einer Temperatur von +40°C über die Einleitung 15d von oben in den Innenraum 6d des Kondensators 6 eingeführt. Das innerhalb des Kondensators 6 ausgehend von der Einleitung 15d nach unten strömende Abdampfgas F1 wird durch den Hochdruckwärmetauscher 13 abgekühlt, sodass sich zwischen der Oberfläche 6b des Flüssiggases F1 und einem Grenzbereich 6c ein Kondensationsabschnitt 6a ausbildet, innerhalb welcher das Abdampfgas F2 eine Temperatur aufweist, welche, unter Berücksichtigung des im Innenraum 6d anliegenden Drucks, unterhalb der Verdampfungstemperatur von Flüssiggas F1 liegt. Die von dem Kondensationskerngenerator 10 erzeugten Kondensationskerne in Form von Flüssiggaströpfchen 10a werden vorzugsweise in den Kondensationsabschnitt 6a eingesprüht, damit das sich in diesem Abschnitt befindliche Abdampfgas F2 an diesen Kondensationskernen kondensiert und anschliessend über die Oberfläche 6b dem das Flüssiggas F1 enthaltenden Teilvolumen 6e des Kondensators 6 zugeleitet wird. Das Flüssiggas F1 weist im Teilvolumen 6e in dem hiermit beschriebenen Verfahrensbeispiel einen Druck von 17 bara und eine Temperatur von -120°C auf.

Das Verfahren zum Betrieb des Brenngasversorgungssystems 1 wird an Hand des nachfolgenden Ausführungsbeispiels im Detail erläutert. Im Gegensatz zu einem Flüssiggastankschiff, dessen Stauraum grösstenteils aus LNG-Tanks besteht, weist ein übliches Handelsschiff einen relativ kleinen LNG-Tank auf, da der Stauraum für zu transportierende Güter zur Verfügung steht. Der Hochdruck-Gaseinspritzmotor 2 eines solchen Handelsschiffs hat während der Fahrt einen Gasbedarf von beispielsweise etwa 10t / h. Im LNG-Tank des Handelsschiffs beträgt die Boil-off-Rate (BOR), daher die Menge an zu Abdampfgas F2 verdampftem Flüssiggas F1 beispielsweise etwa 800 kg / h. Das Brenngasversorgungssystem 1 hat einerseits die Aufgabe den Hochdruck-Gaseinspritzmotor 2 mit einer lastabhängig unterschiedlichen, jedoch genügend grossen Menge an Hochdruckbrenngas zu versorgen. Zudem hat das Brenngasversorgungsystem 1 die Aufgabe den Gasdruck im LNG-Tank zu überwachen und sicherzustellen, dass der Gasdruck einen vorgegebenen Wert nicht übersteigt. Zudem hat das Brenngasversorgungssystem 1 die Aufgabe sicherzustellen, dass das überschüssige, sich im LNG-Tank befindliche Abdampfgas ökonomisch sowie ökologisch vorteilhaft verwendet wird, und insbesondere zur Speisung des Hochdruck-Gaseinspritzmotors 2, und allenfalls zur Speisung eines Niederdruckverbrauchers 11 verwendet wird.

Das sich im LNG-Tank 3 befindliche Flüssiggas F1, gelagert unter etwa atmosphärischem Druck und einer Temperatur von etwa - 163°C, wird mit Hilfe der Niederdruckpumpe 4 zur Hochdruckpumpe 5 gefördert, und dabei auf einen Druck von etwa 7 bara verdichtet, mit einer Temperatur von -150°C. Um den Hochdruck-Gaseinspritzmotor 2 mit genügend Hochdruckbrenngas zu versorgen wird das Flüssiggas F1 anschliessend in der Hochdruckpumpe 5 zu Hochdruckflüssiggas auf einen Druck von 300 bara verdichtet, bei einer Fördertemperatur von -150°C, und anschliessend im Hochdruckverdampfer 7 zu gasförmigem oder superkritischem Hochdruckbrenngas verdampft. Das derart erzeugte Hochdruckbrenngas wird dem Hochdruck-Gaseinspritzmotor 2 zugeführt. Die Menge des zugeführten Hochdruckbrenngases kann durch eine entsprechende Ansteuerung der Fördermenge der Hochdruckpumpe 5 und gegebenenfalls der Niederdruckpumpe 4 geregelt werden.

Das Abdampfgas F2 wird dem Tank 3 unter etwa atmosphärischem Druck und einer Temperatur von etwa -162°C entnommen und anschliessend in einem Verdichter 9 auf einen Druck von etwa 18 bara, mit einer Austrittstemperatur von + 40°C verdichtet. Das derart verdichtete Abdampfgas F2 wird vorzugsweise mit diesem Druck und dieser Temperatur in den Innenraum 6d des Kondensators 6 eingeleitet.

Wie in Figur 6 dargestellt strömt innerhalb des Kondensators 6 das sich im Hochdruckwärmetauscher 13 befindliche Hochdruckflüssiggas mit einem Druck von 300 bara und einer Fördertemperatur von -150°C nach oben, wogegen das verdichtete Abdampfgas F2 von Oben in den Innenraum 6d des Kondensators 6 eingeleitet wird, und im oberen Abschnitt des Kondensators 6 entlang des Hochdruckwärmetauschers 13 nach unten strömt, und das verdichtete Abdampfgas F2 somit im Gegenstrom bezüglich dem innerhalb des Hochdruckwärmetauschers 13 fliessende Hochdruckflüssiggas fliesst, wodurch das Abdampfgas F2 abgekühlt wird, und vorzugsweise auf seine Kondensationstemperatur abgekühlt wird. Bei einem Druck von 17 bara liegt die Siedetemperatur des Abdampfgases F1 bei etwa -110°C. Um eine vollständige Rückverflüssigung des Abdampfgases F2 im Kondensator 6 zu erreichen, muss der Hochdruckwärmetauscher 13 bzw. das darin fliessende Hochdruckgas ein ausreichendes Potential zur Übernahme der Enthalpie bei Temperaturen unter -110°C aufweisen. Unter Berücksichtigung einer notwendigen Übersättigung für die Kondensation bei 17bara wird die tatsächliche Kondensationstemperatur etwa 5 bis 10 K unter der Siedetemperatur bei 17bar a liegen, sodass die Kondensation etwa bei -120°C stattfindet.

Die -150°C, mit denen das überkritische Hochdruckgas bzw. das Hochdruckflüssiggas auf der Hochdruckseite in den Hochdruckwärmetauscher 13 eintritt, stehen für die Wärmeübertragung nicht direkt zur Verfügung, da für die Wärmeübertragung durch das überkritische Hochdruckgas und die Wand des Hochdruckwärmetauschers 13 mehrere Temperaturgradienten berücksichtigt werden müssen. Als erster Ansatz wird angenommen, dass die Wandtemperatur des Hochdruckwärmetauschers 13 auf der dem Abdampfgas F2 zugewandten Seite -145°C beträgt. Dies ermöglicht eine Enthalpieübertragung vom Abdampfgas F2 auf das überkritische Hochdruckgas bzw. das Hochdruckflüssiggas in einem Temperaturfenster von 25°K.

Um im Kondensator 6 die Effizienz der Rückverflüssigung von Abdampfgas F2 zu Flüssiggas F1 zu erhöhen, werden mit Hilfe eines Kondensationskerngenerators 10 als Kondensationskerne Flüssiggaströpfchen erzeugt, welche in den Innenraum 6d des Kondensators 6 eingespritzt werden. Dazu wird in einem Seitenstrom 18a ein Teil des von der Hochdruckpumpe 5 zu Hochdruckflüssiggas verdichteten Flüssiggases F1 dem Kondensationskerngenerator 10 zugeleitet, wobei das zugeleitete Hochdruckflüssiggas einen Druck von 300 bara und eine Temperatur von -150°C aufweist. Die im Kondensationskerngenerator 10 beispielsweise mit Hilfe zumindest einer Düse erzeugten Tröpfchen 10a werden in einen Kondensationsabschnitt 6a des Kondensator 6 eingeleitet, in welchem sich die Temperatur das Abdampfgases F2 bereits unter dessen Kondensationstemperatur von -110°C liegt. Die in den Kondensator 6 eintretenden Flüssiggaströpfchen 10a sind somit unterkühlt, da die Kondensationstemperatur des Abdampfgases F2 bei 17 bara 110°C beträgt.

Die unterkühlten Flüssiggaströpfchen 10a dienen als Kondensationskerne für das zu kondensierende Abdampfgas F2. Das heisst, jedes unterkühlte Flüssiggaströpfchen 10a zieht Gasmoleküle aus dem zu kondensierenden Abdampfgas F2 an.
Die Kondensation des Abdampfgases F2 an den Flüssiggaströpfchen 10a ist aus den folgenden Gründen effektiver als eine Kondensation an der Aussenwand des Hochdruckwärmetauschers 13:
- Die Flüssiggaströpfchen sind bei -150°C unterkühlt, wodurch aufgrund der größeren Temperaturdifferenz ein höheres Potential zur Anziehung von Gasmolekülen des Abdampfgases F2 entsteht.
- Die spezifische Oberfläche eines Flüssiggaströpfchens ist grösser als die vergleichbare Oberfläche der Aussenwand des Hochdruckwärmetauschers 13, da die Fläche einer Kugel um Pi mal größer ist als die Fläche einer ebenen oder gekrümmten Oberfläche.

Die Figuren 2 und 3 zeigen weitere Ausführungsbeispiele von Brenngasversorgungssystemen 1, bei denen, im Unterschied zum Ausführungsbeispiel gemäss Figur 1, im Abdampfgasstrom, nach dem Austreten des Abdampfgases F2 aus dem LNG-Tank 3, ein Wärmetauscher 8 angeordnet ist, der dazu dient das Hochdruckflüssiggas nach der Hochdruckpumpe 5 und vor dem Eintritt in den Kondensationskerngenerator 10 weiter abzukühlen. Dadurch wird das in der Fluidleitung 15a, 15b strömende Abdampfgas F2 im Wärmetauscher 8 erwärmt. Der Wärmetauscher 8 wird vorzugsweise von einem Seitenstrom 18a des Hochdruckflüssiggases versorg, wobei der Seitenstrom 18a der Hochdruckpumpe 5 oder stromabwärts der Hochdruckpumpe 5 aus der Hochdruckfluidleitung 17a entnommen wird, dem Wärmetauscher 8 zugeleitet wird, und nachfolgend vorzugsweise dem Kondensationskerngenerator 10 zugeleitet wird. Der Wärmetauscher 8 ist vorzugsweise wie in Figur 2 dargestellt, flussaufwärts des Verdichters 9 angeordnet.

Für das erfindungsgemässe Brenngasversorgungssystem 1 ist es wichtig, dass die in Figur 6 dargestellte Kondensation des dem Kondensator 6 zugeführten Abdampfgases F2 im Innenraum 6d des Kondensators 6 vorzugsweise möglichst energieeffizient abläuft. Es ist einem Fachmann allgemeint bekannt, dass das in den Figuren 1 bis 5 dargestellte Brenngasversorgungssystem 1 eine nicht dargestellte Ansteuervorrichtung sowie eine Mehrzahl von Signalleitungen, zum Beispiel zum Ansteuern der Niederdruckpumpe 4, der Hochdruckpumpe 5, dem Verdichter 9, und der Ventile 25a bis 25 g umfasst, und einer Mehrzahl von Signalleitungen sowie Sensoren umfasst, zum Beispiel zum Erfassen von Druck und / oder Temperatur an unterschiedlichsten Stellen des durch das Brenngasversorgungssystems 1 strömenden Flüssiggases F1 und Abdampfgases F2, sowie von Hochdruckflüssiggas und Hochdruckbrenngas. Es ist für einen Fachmann auf Grund der vorliegenden Offenbarung daher auf einfache Weise nachvollziehbar, welche Ansteuerungsmöglichkeiten und welche Parameteroptimierungen das erfindungsgemässe Brenngasversorgungssystem 1 bietet, um das erfindungsgemässe Brenngasversorgungssystem 1 vorteilhaft zu betreiben, und um insbesondere sicherzustellen, dass die Kondensation im Kondensator 6 vorteilhaft, vorzugsweise energieeffizient abläuft. So kann beispielsweise aus Figur 1 auf einfache Weise abgeleitet werden, dass die Kondensation das Abdampfgases F2 im Kondensator 6 über die vom Verdichter 9 geförderte Fördermenge an Abdampfgas F2, und allenfalls zudem dessen Temperatur, und/oder über die durch den Seitenstrom 18a, 18b dem Kondensationskerngenerator 10 zugeführte Fördermenge an Hochdruckflüssiggas, und insbesondere auch dessen Temperatur, und/oder durch die vom Kondensationskerngenerator 10 erzeugte Grösse und Menge an Kondensationskernen 10a, und/oder die Anordnung und Ausrichtung des Stroms der Flüssiggaströpfchen 10a im Innenraum 6d des Kondensators 6 und/oder die Anordnung und Ausgestaltung des Hochdruckwärmetauschers 13 im Innenraum 6d des Kondensators 6 beeinflusst werden kann. Zudem kann durch die Verwendung und geschickte Anordnung und Auslegung eines in den Figuren 2 bis 5 dargestellten Wärmetauscher 8 die Temperatur der in den Innenraum 6d eingesprühten Flüssigkeitströpfchen 10a, und/oder die Temperaturdifferenz von eingeleitetem Abdampfgas F2 und Flüssigkeitströpfchen 10a beeinflusst werden. Daher ist es einem Fachmann, ausgehend von dem hiermit offenbarten Erfindungsgedanken, auf Grund seines Fachwissens auf einfache Weise möglich, Verfahrensparameter derart zu wählen, dass das Brenngasversorgungssystem wirtschaftlich vorteilhaft, und insbesondere energieeffizient betreibbar ist, und dass insbesondere das im Kondensator 6 ablaufende Kondensationsverfahren eine hohe Kondensationsrate aufweist.

Figur 3 zeigt in einer weitere Ausführungsvariante einen Gasspeicherbehälter 14, der über ansteuerbare Ventile 25d, 25e mit den Gasleitungen 15a, 15c verbunden ist. Dieser Gasspeicherbehälter 14 dient zur Aufnahme von Abdampfgas F2, insbesondere in Zeitperioden, während welchen der Hochdruck-Gaseinspritzmotor 2 keinen Brennstoff benötigt, beispielsweise weil das Handelsschiff still steht. Während einer solchen Zeitperiode wird dem Hochdruck-Gaseinspritzmotor 2 kein Hochdruckflüssiggas zugeleitet, sodass der Hochdruckflüssiggas im Wärmetauscher 13 im Kondensator 6 nicht als Wärmesenke dienen kann, und daher im Kondensator 6 keine Kühlung stattfindet, sodass die Kondensation im Kondensator 6 zum Erliegen kommt. Währen des Stillstandes des Handelsschiffes fällt im LNG-Tank 3 jedoch trotzdem Abdampfgas F2 an, das aus dem LNG-Tank 3 abgeführt werden muss, um einen unzulässigen Druckanstieg im LNG-Tank 3 zu verhindern. Der Gasspeicherbehälter 14 ist insbesondere während solchen Zeitperioden von Vorteil, weil das Abdampfgas F2 über den Verdichter 9 in den Gasspeicherbehälter 14 gefördert werden kann, dort zwischengespeichert werden kann, und anschliessend während einer Fahrt des Handelsschiffes, beziehungsweise während dem Zuführen von Hochdruckflüssiggas an den Hochdruck-Gaseinspritzmotor 2, dem Gasspeicherbehälter 14 entnommen und im Kondensator 6 verflüssigt werden kann.

Der Gasspeicherbehälter 14 ist vorteilhafterweise mit einem hochporösen Feststoff (bspw. Adsorbens oder Metallhydrid) oder einem flüssigen Lösungsmittel gefüllt, wodurch sich die Speicherkapazität des Gasspeicherbehälters 14, gegenüber der eines leeren Behälters, bei gleichem Druck und Temperatur beträchtlich erhöht. Ist der Gasspeicherbehälter 14 nicht im Speicherbetrieb oder wird er entleert, so ist der Gasspeicherbehälter 14 mit der Saugleitung 15b des Verdichters 9 verbunden, indem das Ventil 25d geöffnet ist und das Ventil 25e geschlossen ist. Ist der Gasspeicherbehälter 14 im Speicherbetrieb, so ist er mit der Druckleitung 15c stromabwärts des Verdichters 9 verbunden, indem das Ventil 25e geöffnet, und das Ventil 25d geschlossen ist.

Es kann sich zudem als vorteilhaft erweisen zumindest ein Teil das Abdampfgases F2 über eine Fluidleitung 15e einem Niederdruckverbraucher 11 zuzuleiten, wobei vorzugsweise ein ansteuerbares Ventil 25c und vorzugsweise zudem ein ansteuerbares Ventil 25b vorgesehen sind, um den Gasfluss zum Niederdruckverbraucher 11 anzusteuern, und um allenfalls eine Aufteilung der Gasmengen zwischen Kondensator 6 und Niederdruckverbraucher 11 anzusteuern.

Es kann sich zudem als vorteilhaft erweisen das aus dem Innenraum 6d des Kondensators 6 über die Rückführleitung 21 ausströmende Flüssiggas F1 ansteuerbar über ein Ventil 25f der Hochdruckpumpe 5 und/oder über ein Ventil 25g dem LNG-Tank 3 zuzuführen.

Figur 4 zeigt ein weiteres Ausführungsbeispiel eines Brenngasversorgungssystems 1, bei welchem das Abdampfgas F2 nach dem Tank 3 dem Wärmetauscher 8 zugeführt wird, anschliessend im Verdichter 9 zu verdichtetem Abdampfgas F2 komprimiert wird, wobei dieses verdichtete Abdampfgas F2 wiederum dem Wärmetauscher 8 zugeführt wird, sodass das verdichtete Abdampfgas F2 im Wärmetauscher 8 stark abgekühlt wird, und derart abgekühlt über die Einleitung 15d dem Kondensator 6 zugeführt wird. Dieses komprimierte und stark abgekühlte Abdampfgas F2 weist den Vorteil auf, dass dieses Abdampfgas F2 im Kondensator 6 besser bzw. einfacher und dadurch energieeffizienter kondensiert.

Figur 5 zeigt ein weiteres Ausführungsbeispiel eines Brenngasversorgungssystems 1, welches im Unterschied zu dem in Figur 3 dargestellten Ausführungsbeispiel zwei separate Hochdruckpumpen 5, nämlich eine erste Hochdruckpumpe 5a und eine zweite Hochdruckpumpe 5b, sowie daran anschliessend zwei separate Hochdruckfluidleitungen 17a, 17c aufweist. Zudem weist das Ausführungsbeispiel gemäss Figur 5, im Unterschied zum Ausführungsbeispiel gemäss Figur 3, in der Rückführleitung 21 kein Ventil 25g, und somit keine Rückführung in den Tank 3 auf. Das Ausführungsbeispiel gemäss Figur 5 wird vorzugsweise derart betrieben, dass nur der ersten Hochdruckpumpe 5a Flüssiggas F1 aus dem Tank 3 zugeleitet wird und in der ersten Hochdruckpumpe 5a zu Hochdruckflüssiggas verdichtet wird. Dieses Hochdruckflüssiggas wird, wie in Figur 5 dargestellt, dem Hochdruckwärmetauscher 13 und anschliessend dem Hochdruckverdampfer 7 zugeleitet. In einem vorteilhaften Verfahren wird der zweiten Hochdruckpumpe 5b das sich im Kondensator 6 befindliche Flüssiggas F1, im Wesentlichen ein Kondensat, zugeführt, und in der zweiten Hochdruckpumpe 5b zu Hochdruckflüssiggas verdichtet, wobei dieses, unter Umgehung des Kondensators 6, in die Hochdruckfluidleitung 17b und/oder direkt in den Hochdruckverdampfer 7 eingespeist wird. Diese Anordnung bzw. dieses Verfahren weist den Vorteil auf, dass das aus dem Tank 3 abgeführte Flüssiggas F1 nicht durch im Kondensator 6 erzeugtes Kondensat bzw. Flüssiggas F1, und in die Niederdruckfluidleitung 16a rückgespeistes Flüssiggas F1 erwärmt wird. Diese Ausführungsform weist daher den Vorteil auf, dass die Kondensation im Kondensator 6 eine höhere Effizient bzw. einen höheren Wirkungsgrad aufweist. In einem weiteren möglichen Verfahren kann der zweiten Hochdruckpumpe 5b entweder über das Ventil 25f nur Kondensat bzw. Flüssiggas F1 aus dem Kondensator 6 zugeleitet werden, oder über das Ventil 25g nur Flüssiggas F1 aus dem Tank 3 zugeführt werden, oder durch eine entsprechende Ansteuerung beider Ventile 25f, 25g eine Mischung umfassen einen Anteil Füssiggas F1 aus dem Kondensator 6 und einen Anteil Flüssiggas F1 aus dem Tank 3. Das Mischverhältnis dieser beiden Anteile Flüssiggase F1 kann, abhängig vom jeweiligen Betriebspunkt des Brenngasversorgungssystems 1, variiert werden, beispielsweise um den Wirkungsgrad des Brenngasversorgungssystems 1 zu optimieren, beispielsweise abhängig von der vom Hochdruck-Gaseinspritzmotor 2 angeforderten Menge an Hochdruckbrenngas.

## Patentansprüche

1. Brenngasversorgungssystem (1) zum Versorgen eines Hochdruck-Gaseinspritzmotors (2) mit in einem LNG-Tank (3) gespeicherten Gas, umfassend eine Hochdruckpumpe (5), welche Fluid leitend mit dem LNG-Tank (3) verbindbar ist, um Flüssiggas (F1) aus dem LNG-Tank (3) zuzuführen und dieses zu einem Hochdruckflüssiggas zu verdichten, umfassend einen Kondensator (6) in welchem ein Hochdruckwärmetauscher (13) angeordnet ist, umfassend einen Hochdruckverdampfer (7), der über den Hochdruckwärmetauscher (13) Fluid leitend mit der Hochdruckpumpe (5) verbunden und stromabwärts des Kondensators (6) angeordnet ist, wobei der Hochdruckverdampfer (7) das Hochdruckflüssiggas in ein Hochdruckbrenngas wandelt und das Hochdruckbrenngas nach dem Hochdruckverdampfer (7) dem Hochdruck-Gaseinspritzmotor (2) zugeleitet ist, umfassend einen Verdichter (9), der Fluid leitend mit dem LNG-Tank (3) verbindbar ist, um Abdampfgas (F2) aus dem LNG-Tank (3) zuzuführen, wobei der Verdichter (9) stromabwärts über eine Einleitung (15d) Fluid leitend mit einem Innenraum (6d) des Kondensators (6) verbunden ist, um das Abdampfgas (F2) in den Innenraum (6d) einzuleiten, sowie umfassend einen Kondensationskerngenerator (10), der stromaufwärts Fluid leitend mit der Hochdruckpumpe (5) verbunden ist, wobei der Kondensationskerngenerator (10) derart ausgestaltet ist, dass dieser aus dem Hochdruckflüssiggas Flüssiggaströpfchen (10a) erzeugt, die als Kondensationskerne dienen, wobei der Kondensationskerngenerator (10) die Kondensationskerne in den Innenraum (6d) einführt, um über die Kondensationskerne eine Kondensation des eingeleiteten Abdampfgases (F2) zu fördern, sodass sich daraus Flüssiggas (F1) ausbildet, und dass das sich im Kondensator (6) gebildete Flüssiggas (F1) der Hochdruckpumpe (5) und/oder dem LNG-Tank (3) zugeleitet ist.

2. Brenngasversorgungssystem (1) nach Anspruch 1, **dadurch gekennzeichnet, dass** stromaufwärts des Verdichters (9) ein Wärmetauscher (8) angeordnet ist, welcher mit dem zugeleiteten Abdampfgas (F2) Wärme austauscht, und dass der Kondensationskerngenerator (10) stromaufwärts Fluid leitend mit dem Wärmetauscher (8) und nachfolgend mit der Hochdruckpumpe (5) verbunden ist, damit der Wärmetauscher (8) Wärme mit dem zugeleiteten Hochdruckflüssiggas austauscht.

3. Brenngasversorgungssystem (1) nach Anspruch 1, **dadurch gekennzeichnet, dass** stromaufwärts des Verdichters (9) ein Wärmetauscher (8) angeordnet ist, welcher mit dem zugeleiteten Abdampfgas (F2) Wärme austauscht, und dass der Verdichter (9) stromaufwärts Fluid leitend wiederum mit dem Wärmetauscher (8) verbunden ist, damit der Wärmetauscher (8) Wärme mit dem durch den Verdichter (9) verdichteten Abdampfgas (F2) austauscht.

4. Brenngasversorgungssystem (1) nach einem der vorhergehenden Ansprüche, **dadurch gekennzeichnet, dass** die Einleitung (15d) das Abdampfgases (F2) von Oben in den Kondensator (6) erfolgt, dass sich der Hochdruckwärmetauscher (13) in vertikaler Richtung innerhalb des Kondensators (6) erstreckt, und dass der Hochdruckwärmetauscher (13) derart angeordnet ist, dass das Hochdruckflüssiggas in Hochdruckwärmetauscher (13) von unten nach oben strömt.

5. Brenngasversorgungssystem (1) nach einem der vorhergehenden Ansprüche, **dadurch gekennzeichnet, dass** der Kondensationskerngenerator (10) derart angeordnet ist, dass vom Kondensationskerngenerator (10) erzeugte Kondensationskerne (10a) in einem Kondensationsabschnitt (6a) in den Innenraum (6d) des Kondensators (6) eingeleitet sind, in welchem der Innenraum (6d) eine Kondensationstemperatur aufweist.

6. Brenngasversorgungssystem (1) nach einem der vorhergehenden Ansprüche, **dadurch gekennzeichnet, dass** stromabwärts des LNG-Tanks (3) ein Speicherbehälter (14) zum Zwischenspeichern von Abdampfgas (F2) angeordnet ist.

7. Brenngasversorgungssystem (1) nach einem der vorhergehenden Ansprüche, **dadurch gekennzeichnet, dass** die Hochdruckpumpe (5) zumindest eine erste Hochdruckpumpe (5a) und eine zweite Hochdruckpumpe (5b) umfasst, wobei die erste Hochdruckpumpe (5a) Fluid leitend mit dem Kondensationskerngenerator (10) und Fluid leitend über den Hochdruckwärmetauscher (13) mit dem Hochdruckverdampfer (7) verbunden ist, und wobei die zweite Hochdruckpumpe (5b) unter Umgehung des Hochdruckwärmetauschers (13) Fluid leitend mit dem Hochdruckverdampfer (7) verbunden ist.

8. Brenngasversorgungssystem (1) nach Anspruch 7, **dadurch gekennzeichnet, dass** die erste Hochdruckpumpe (5a) Fluid leitend mit dem LNG-Tank (3) verbunden ist, um Flüssiggas (F1) zuzuführen, und dass die zweite Hochdruckpumpe (5b) Fluid leitend mit einem Auslass (6e) des Kondensators (6) verbunden ist, um der zweiten Hochdruckpumpe (5b) im Kondensator (6) angesammeltes Flüssiggas (F1) zuzuleiten.

9. Brenngasversorgungssystem (1) nach Anspruch 8, **dadurch gekennzeichnet, dass** die zweiten Hochdruckpumpe (5b) sowohl Fluid leiten mit dem Auslass (6e) des Kondensators (6) als auch Fluid leitend mit dem LNG-Tank (3) verbunden ist, wobei Ventile (25f, 25g) vorgesehen sind, um den aus dem Kondensator (6) zugeführten Anteil Flüssiggas (F1) und den aus dem LNG-Tank (3) zugeführten Anteil Flüssiggas (F1) anzusteuern.

10. Verfahren zum Versorgen eines Hochdruck-Gaseinspritzmotors (2) mit Gas, das in einem LNG-Tank (3) teilweise als Flüssiggas (F1) und teilweise als Abdampfgas (F2) gespeichert ist, indem das Flüssiggas (F1) aus dem LNG-Tank (3) einer Hochdruckpumpe (5) zugeführt wird und von dieser zu einem Hochdruckflüssiggas verdichtet wird, dass das Hochdruckflüssiggas anschliessend einem in einem Kondensator (6) angeordneten Hochdruckwärmetauscher (13) und nachfolgend einem Hochdruckverdampfer (7) zugeführt wird, dass das Hochdruckflüssiggas im Hochdruckverdampfer (7) in ein Hochdruckbrenngas umgewandelt wird, sodass ein unter Hochdruck stehendes Brenngas erzeugt wird, welches dem Hochdruck-Gaseinspritzmotor (2) zugeleitet wird, indem das Abdampfgas (F2) aus dem LNG-Tank (3) einem Verdichter (9) zugeführt und anschliessend in den Kondensator (6) eingeleitet wird, dass in einem Kondensationskerngenerator (10) aus Hochdruckflüssiggas ein Strom von Kondensationskernen in Form von Flüssiggaströpfchen erzeugt wird, welche im Kondensator (6) dem eingeleiteten Abdampfgas (F2) zugeleitet werden, um durch die Flüssiggaströpfchen eine Kondensation des Abdampfgases (F2) zu Flüssiggas (F1) zu fördern, und indem das im Kondensator (6) gebildete Flüssiggas (F1) der Hochdruckpumpe (4) und/oder dem LNG-Tank (3) zugeleitet wird.

11. Verfahren nach Anspruch 10, **dadurch gekennzeichnet, dass** im Kondensator (6) das Flüssiggas (F1) im Hochdruckwärmetauscher (13) von unten nach oben gefördert wird, und dass das Abdampfgas (F2) im Kondensator (6) im Gegenstrom von oben nach unten gefördert wird.

12. Verfahren nach einem der Ansprüche 10 oder 11, **dadurch gekennzeichnet, dass** im Innenraum (6d) des Kondensators (6) ein Kondensationsabschnitt (6a) erzeugt wird, innerhalb welchem das Abdampfgas (F2) eine Temperatur aufweist, welche unterhalb der Verdampfungstemperatur des Flüssiggases (F1) liegt, und dass in diesen Kondensationsabschnitt (6a) Kondensationskerne in Form von unterkühlten Flüssiggaströpfchen (10a) eingesprüht werden.

13. Verfahren nach einem der Ansprüche 10 bis 12, **dadurch gekennzeichnet, dass** aus oder nach der Hochdruckpumpe (5) ein Seitenstrom von Hochdruckflüssiggas entnommen wird, dass dieser Seitenstrom in einem Wärmetauscher (8) gekühlt wird, dass im Wärmetauscher (8) zugleich aus dem LNG-Tank abgeleitetes Abdampfgas (F2) erwärmt wird, dass das Abdampfgas (F2) nach dem Wärmetauscher (8) dem Kondensator (6) zugeleitet wird, und dass das Hochdruckflüssiggas nach dem Wärmetauscher (8) dem Kondensationskerngenerator (10) zugeleitet wird.

14. Verfahren nach einem der Ansprüche 10 bis 13, **dadurch gekennzeichnet, dass** das Hochdruckflüssiggas auf einen Druck im Bereich zwischen 150 bara und 400 bara verdichtet wird.

15. Handelsschiff umfassend eine Brenngasversorgungssystem 1 nach einem der Ansprüche 1 bis 9.
